# EUROPEAN PATENT APPLICATION

(11) **EP 3 771 340 A1**
(43) Date of publication of application: **03.02.2021**
(21) Application number: 20188482.2
(22) Date of filing: 29.07.2020
(51) Int. Cl.: A23B 4/037, A23B 4/20, A23L 13/60

(54) **BACON-BASED FOOD PRODUCTS WITH EXTENDED SHELF LIFE**

(30) Priority: 30.07.2019 US 201962880357 P
(71) Applicant: MiracleCorp Products, Dayton OH 45439 (US)
(72) Inventor: SHERK, William M., Oakwood, Ohio 45419 (US); WANG, Ding, Dayton, Ohio 45459 (US); BURDEN, Sharon, Dayton, Ohio 45406 (US)
(74) Representative: Moore, Michael Richard

(57) **Abstract**

A method for manufacturing a shelf-stable bacon-based food product is provided, the method including: (a) selecting a bacon starting material having a linoleic acid concentration of about 14% or less of total fatty acid content; (b) mixing the selected bacon starting material with at least one natural antioxidant and one or more additional ingredients to provide a bacon-based blend; and (c) freeze-drying the bacon-based blend to provide a shelf-stable bacon-based food product. Bacon-based and bacon-first food products formulated according to the disclosed methods and having enhanced shelf life are also provided herein.

## Description

### CROSS-REFERENCE TO RELATED APPLICATIONS

This application claims priority to U.S. Provisional Application No. 62/880,357, filed July 30, 2019, the contents of which are incorporated herein by reference in their entirety.

### TECHNICAL FIELD

This disclosure relates generally to the manufacture of food products having extended shelf life, texture retention, and resistance to rancidity. More specifically, the present disclosure relates to bacon-based food products and processes for manufacturing bacon-based food products having such attributes.

### BACKGROUND

Conventional approaches to preparing a bacon-based food product with extended shelf life have been largely unsuccessful. For example, the unsaturated fatty acids that help to impart the correct bacon flavor, texture, and resistance to crumbling also limit storage over extended periods at room temperature conditions compared to food products made from other protein sources that contain more saturated fats, such as beef- or plant-based variants. The difficulty of achieving a shelf stable bacon-based product retaining the appropriate flavor, texture, shape, and smell (collectively, the organoleptic properties) of bacon is due, at least in part, to bacon's higher susceptibility to oxidation and ensuing rancidity. Nevertheless, neither beef-based meat products nor their vegetable-based counterparts have heretofore been able to adequately replicate the organoleptic properties of genuine bacon-based meat products.

Autoxidation, or the absorption of oxygen from the environment, leads to oxidative rancidity and is most frequently caused through the deterioration of lipids by atmospheric oxygen during a complex series of chemical reactions. This deterioration of lipids is a significant factor in limiting the amount of time a food product may be stored. Unfortunately, during conventional meat-processing operations in general and bacon-processing operations in particular, avoidance of ambient oxygen is both difficult and expensive.

The moisture content in the food product may be an additional factor in the onset of rancidity, particularly for bacon-based food products having higher amounts of unsaturated fats. Moisture content is problematic even in situations where the presence of oxygen is maintained at a low level, such as in vacuum-packed or other sealed food container approaches.

Previous attempts have been made to use freeze-drying as a way to reduce the onset of rancidity through the removal of moisture associated with lipid oxidation, or to remove oxygen through the use of gas-tight packaging. Unfortunately, the conventional approach to freeze-drying that is required to achieve a suitably low moisture level (for example, between about 6 and 8 percent by weight) to avoid rancidity also prevents bacon from retaining its shape, particularly after even moderate levels of handling associated with transport, both before and after sale to the end-use consumer. Currently, the shelf life is limited by lipid oxidation and is too short to permit the sale of dry bacon-first food products. Specifically, conventional freeze-drying has the undesirable tendency to cause bacon strips to crumble, which detrimentally affects the desired crispy texture and strip-like shape.

A need exists for improved bacon-based food products, and more specifically bacon-first food products, and methods for manufacturing the same.

### SUMMARY

Disclosed herein are improved shelf-stable protein-rich meat products, including bacon-based and bacon-first meat products, and their methods of manufacture for human or animal consumption.

In one embodiment, a method for manufacturing a shelf-stable bacon-based meat product is provided, the method comprising: (a) selecting a bacon starting material having a linoleic acid concentration of about 14% (w/w) or less of total fatty acid content; (b) mixing the selected bacon starting material with at least one natural antioxidant and one or more additional ingredients to provide a bacon-based blend; and (c) freeze-drying the bacon-based blend to provide a shelf-stable bacon-based meat product.

In another embodiment, a method for manufacturing a shelf-stable bacon-based meat product is provided, the method comprising: (a) selecting a bacon starting material having a linoleic acid concentration of about 14% (w/w) or less of total fatty acid content; (b) cooking the selected bacon starting material; (c) mixing the product of step (b) with at least one natural antioxidant and one or more additional ingredients to provide a bacon-based blend; (d) shaping the bacon-based blend; and (e) freeze-drying the shaped bacon-based blend to provide a shelf-stable bacon-based meat product.

Also provided are bacon-based and bacon-first treats, toppers, balanced diets, and mixed kibble products manufactured from the disclosed processes.

These and additional aspects and features of the instant disclosure will be clarified by reference to the figures and detailed description set forth herein.

### BRIEF DESCRIPTION OF THE DRAWINGS

The following detailed description of specific embodiments of the present disclosure can be best understood when read in conjunction with the following drawings, where like structure is indicated with like reference numerals and in which:
FIG. 1 depicts a top perspective view of an array of individual food product packages that may be used to provide sealed containment of various individual slabs of bacon in preparation of a sous vide process in accordance with one or more embodiments of the present disclosure;
FIG. 2 depicts a top perspective view of an array of individual strips of bacon that have been grouped together in preparation of a sous vide process in accordance with one or more embodiments of the present disclosure;
FIG. 3A depicts a flow diagram of at least some of the steps for preparing a bacon-based treat product in accordance with one or more embodiments of the present disclosure;
FIG. 3B depicts a flow diagram of at least some of the steps for preparing a bacon-based treat product in accordance with one or more embodiments of the present disclosure;
FIG. 4A depicts a flow diagram of at least some of the steps for preparing a bacon-based topper product in accordance with one or more embodiments of the present disclosure;
FIG. 4B depicts a flow diagram of at least some of the steps for preparing a bacon-based topper product in accordance with one or more embodiments of the present disclosure;
FIG. 5A depicts a flow diagram of at least some of the steps for preparing a bacon-based balanced diet product in accordance with one or more embodiments of the present disclosure;
FIG. 5B depicts a flow diagram of at least some of the steps for preparing a bacon-based balanced diet product in accordance with one or more embodiments of the present disclosure;
FIG. 6 depicts a flow diagram of at least some of the steps for preparing a bacon-based mixed kibble product in accordance with one or more embodiments of the present disclosure;
FIG. 7 depicts the effect of different dietary fat in pigs on shelf life of the resultant pork loin;
FIG. 8A depicts the effect of dietary fatty acid profile on the fatty acid profile of pork retroperitoneal fat;
FIG. 8B depicts the effect of dietary fatty acid profile on the oxidative stability of pork;
FIG. 9A depicts an exemplary dietary fatty acid profile of a diet;
FIG. 9B depicts an exemplary fatty acid profile of pork backfat obtained from pigs fed the diet of FIG. 9A;
FIG. 10 is a table comparing fatty acid profile and peroxide values between 8 different bacon sources;
FIG. 11A depicts shelf life of freeze-dried bacon as measured by peroxide value as an indicator of lipid oxidation;
FIG. 11B depicts shelf life of a bacon treat according to an embodiment of the disclosure, as measured by peroxide value as an indicator of lipid oxidation; and
FIG. 11C depicts shelf life a bacon treat according to an embodiment of the disclosure, as measured by peroxide value as an indicator of lipid oxidation.

### DETAILED DESCRIPTION

The details of one or more embodiments of the presently-disclosed subject matter are set forth in this document. Modifications to embodiments described in this document, and other embodiments, will be evident to those of ordinary skill in the art after a study of the information provided in this document.

While the following terms are believed to be well understood by one of ordinary skill in the art, definitions are set forth to facilitate explanation of the presently-disclosed subject matter.

Unless defined otherwise, all technical and scientific terms used herein have the same meaning as commonly understood by one of ordinary skill in the art to which the presently-disclosed subject matter belongs.

Unless otherwise indicated, all numbers expressing quantities of ingredients, properties such as reaction conditions, and so forth used in the specification and claims are to be understood as being modified in all instances by the term "about." Accordingly, unless indicated to the contrary, the numerical parameters set forth in this specification and claims are approximations that can vary depending upon the desired properties sought to be obtained by the presently-disclosed subject matter.

As used herein, the term "about," when referring to a value or to an amount of mass, weight, time, volume, concentration or percentage is meant to encompass variations of in some embodiments ±20%, in some embodiments ±10%, in some embodiments ±5%, in some embodiments ±1%, in some embodiments ±0.5%, and in some embodiments ±0.1% from the specified amount, as such variations are appropriate to perform the disclosed method.

It should be understood that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

Disclosed herein are improved protein-rich meat products, including bacon-based and bacon-first meat products, and their methods of manufacture for human or animal consumption. The presently disclosed bacon-based meat products exhibit the desirable organoleptic properties of traditionally cooked bacon while also resisting rancidity, thereby providing a high quality, shelf-stable (e.g., having a shelf life of about 12-18 months or longer) protein-rich, bacon-based, or bacon-first meat product.

The term "bacon," as used herein, refers to a product typically obtained from the cured or uncured belly of a swine carcass, including the salts and related agents used to cure it. In embodiments, bacon may also be obtained from the cured or uncured shoulder, loin, jowl, or back of a swine carcass, including the salts and related agents used to cure the same. In embodiments, cured or uncured bacon may be smoked prior to use in the methods disclosed herein. While the United States Department of Agriculture (USDA) requires processors to qualify or identify the term "bacon" by designating source location (for example, pork belly bacon, pork shoulder bacon, or the like) in the product name, the term "bacon," as used herein, includes both USDA bacon and bacon variants.

"Protein-rich food product" or "protein-rich meat product," as used herein, refers to a food product comprising at least 20% (w/w) crude protein content by weight of dry matter. Protein-rich food or meat products may include bacon-based and bacon-first food or meat products.

"Bacon-first food product" or "bacon-first meat product," as used herein, refers to food or meat products, respectively, for human or animal consumption, wherein the most predominant ingredient is bacon. In accordance with Food and Drug Administration (FDA) regulations, package labels for bacon-first food or meat products list bacon as the first ingredient on the food label, with additional ingredients generally listed in descending order of predominance.

"Bacon-based food product" or "bacon-based meat product," as used herein, refers to food or meat products, respectively, for human or animal consumption, wherein bacon may or may not be the most predominant ingredient. The package label for a bacon-based product may or may not list bacon as the most predominant ingredient. For example, in embodiments, bacon may be the first, second, third, or any lower listed ingredient on an accompanying package label.

The bacon-based products disclosed herein include food products for human or animal consumption. In embodiments, bacon-based products for human consumption may include snacks, meals ready-to-eat (MREs), packaged meals for emergency, long-term food storage, outdoor, hiking, or camping use, and the like. In embodiments, bacon-based products for animal (e.g., pet) consumption may include pet treats, meal toppers, balanced diets, mixed kibble products, and the like.

The terms "bacon treat," "bacon-based treat," or "bacon-first treat," as used herein, refer to a bacon-based food product that supplements a balanced diet, such as a pet balanced diet. In embodiments, treats such as those disclosed herein are suitable for use, for example, in rewarding and/or training a pet. In embodiments, a bacon treat food product as disclosed herein may be of a general formula, including but not limited to 15-35% pork bacon, 10-34% pork (shoulder, loin, trim or other parts), 10-34% cheese, 10-34% grains, 10-20% vegetable and fruit, and 0.1-1% prebiotic and 0.1-1% antioxidants.

The terms "bacon meal topper," "bacon topper," "bacon-based topper," and "topper," as used herein, refer to a flavor enhancing product intended to be applied to the top of food, such as pet food, particularly to enhance flavor or nutritional value thereof. In embodiments, a bacon topper food product as disclosed herein may be of a general formula, including but not limited to 10-45% pork bacon, 8-40% pork (shoulder, loin, trim or other parts), 5-20% pork liver, 5-20% pork kidney, 5-20% pork heart, 10-20% cheese, 10-30% grains (e.g., brown rice, oatmeal, pea, and etc.), 10-20% vegetable and fruit (or 1-5% powder vegetables and fruit), 0.1-1% prebiotic and 0.1-1% antioxidants, 0.01-5% vitamin & mineral premix, and 0.0-1% multivitamin pre-mix Vionate® (MiracleCorp Products, Dayton, OH).

The terms "bacon balanced diet," "bacon-based balanced diet," and "bacon-first balanced diet," as used herein, refer to a food product that meets all nutritional requirements, namely, pet food nutritional requirements as set forth by the Association of American Feed Control Officials (AAFCO) and/or the U.S. Food and Drug Administration (FDA). In embodiments, a bacon balanced diet as disclosed herein may be of a general formula, including but not limited to 5-25% pork bacon, 5-24% pork (shoulder, loin, trim, or other parts), 2-20% pork liver, 2-20% pork kidney, 2-20% pork heart, 2-20% cheese, 10-50% grains (e.g., brown rice, oatmeal, barley, peas, beans, etc.), 10-20% vegetable and fruit (or 1-5% powder vegetables and fruit); 0.1-1% prebiotic and 0.1-1% antioxidants, 0.01-5% vitamin & mineral premix, and 0.0-1% multivitamin pre-mix Vionate® (MiracleCorp Products, Dayton, OH).

The term "mixed kibble product," as used herein, refers to a food product comprising a mixture of one or more of a bacon treat, a bacon topper, a bacon balanced diet; a kibble ingredient; and optionally other ingredients. "Kibble," as used herein, refers to a dry food ingredient that meets nutritional requirements for a balanced animal diet. A variety of kibble products are commercially available and suitable for use in the instant disclosure. Kibble products generally include proteins like beef, poultry, fish, and eggs, grains, cereals, and vitamins, minerals and antioxidants. Kibble products may comprise ingredients directed to reducing dental plaque, promoting healthy gums, reducing the risk of detrimental bacteria, promoting healthy gut microflora, reducing the risk of spoilage, etc. Kibble products meet the nutritional requirements as set forth by the Association of American Feed Control Officials (AAFCO) and/or the U.S. Food and Drug Administration (FDA).

"Fatty acid" refers to a carboxylic acid having a saturated or unsaturated aliphatic chain. Fatty acids may be branched or unbranched and include saturated fatty acids (SFA), monounsaturated fatty acids (MUFA), and polyunsaturated fatty acids (PUFA). Fatty acids comprise an important dietary source of energy for humans and animals. In any given dietary source or animal tissue, a mixture of multiple fatty acids of differing length, structure, and saturation may be present.

"Fatty acid profile," as used herein, refers to a summary of the concentrations of the different fatty acids present in a material, such as an animal diet or tissue obtained from an animal, namely a pig. Such tissue may include pork belly fat, pork backfat, pork loin, pork liver, and the like. Exemplary fatty acids present in a fatty acid profile may include, but are not limited to one or more of: capric (10:0), lauric (12:0), myristic (14:0), myristoledic (14:1 trans), myristoleic (14:1 cis), pentadecanoic (15:0), palmitic (16:0), palmitelaidic (16:1 trans), palmitoleic (16:1 cis), heptadecanoic (17:0), 10-heptadecanoic (17:1), stearic (18:0), eliadic (18:1 trans), oileic (18:1 cis), linolelaidic (18:2 trans), linoleic (18:2 cis), gamma-liolenic (18:3 gamma), nonadecanoic (19:0), alpha linolenic (18:3 alpha), arachidic (20:0), 11-eicosanoic (20:1), 11-14 eicosadienoic (20:2), homo-gamma linoleic (20:3), docosadienoic (22:2), docosapentaenoic (22:5), docosahexaenoic (22: 6), lignoceric (24:0), nervonic (24:1), and the like.

As disclosed herein, the fatty acid profile of animal tissue may be influenced or manipulated by the fatty acid content in the dietary intake of the animal. Surprisingly, the instant investigators have found that certain fatty acid profiles of pork belly yield bacon-based meat products that are less susceptible to oxidation and rancidity, when processed according to the methods disclosed herein.

In embodiments, the fatty acid profile of bacon suitable for use in the presently disclosed methods comprises a fatty acid profile such that linoleic acid comprises about 14% (w/w) or less by weight of the total fatty acid content of the bacon. That is, in embodiments, the bacon starting material is selected for a specific linoleic acid percentage of the total fatty acid content of the bacon starting material. In embodiments, the bacon starting material has a linoleic acid concentration of about 14% or less, about 13% or less, about 12% or less, about 11% or less, about 10% or less, about 9% or less, about 8% or less, about 7% or less, about 6% or less, about 5% or less, about 4% or less, about 3% or less, about 2% or less, or about 1% (w/w) or less of the total fatty acid content of the bacon starting material. In a particular embodiment, the linoleic acid concentration is about 13% (w/w) or less of the total fatty acid content. In another particular embodiment, the linoleic acid concentration is about 8% (w/w) or less of the total fatty acid content. In another particular embodiment, the concentration of linoleic acid ranges from about 8% to about 14% (w/w) of the total fatty acid content of the bacon starting material.

"Additives" refers to ingredients added to the formulations described herein to enhance or preserve product quality, nutritional value, and/or organoleptic properties. In embodiments, additives may include natural preservatives, vitamins, minerals, and the like. In embodiments, additives may include natural antioxidants. In embodiments, additives may include pre-biotics, pro-biotics, and other yogurt-based components for maintaining healthy gut microflora. In embodiments, additives may include multivitamin mixes, such as Vionate® (MiracleCorp Products, Dayton, OH).

"Natural antioxidant" refers to naturally occurring ingredients, often found in foods, that may prevent damage caused by free radicals (i.e., oxidation). Natural antioxidants include nutrients such as vitamins A, C, and E, rosemary extract, cinnamon, thymol, blueberry powder, tea polyphenols, and the like. In embodiments, the bacon-based food products disclosed herein comprise one or more natural antioxidants. In embodiments, the one or more natural antioxidants comprise vitamin E (VE) in the form of alpha-tocopherol. In another embodiment, the one or more natural antioxidants comprise a mixture of different forms of vitamin E ("mixed tocopherols"), including tocopherols selected from alpha-, beta-, gamma-, and/or delta-tocopherols. In embodiments, the antioxidants suitable for use in the instant disclosure include in vitro antioxidants, i.e., antioxidants that are not produced in vivo. In embodiments, the bacon-based products disclosed herein comprise one or more natural antioxidants, selected from the group consisting of alpha tocopherol, mixed tocopherols, rosemary extract, cinnamon, thymol, vitamin C, blueberry powder, tea polyphenols, and combinations thereof.

In embodiments, the bacon-based products disclosed herein may contain one or more additional ingredients, including but not limited to pork products other than bacon (such as pork loin, pork organs, and the like), cheese, vegetables, fruits, grains, legumes, vitamins, minerals, additives, and the like. In embodiments, the one or more additional ingredients may be added in powdered form to provide a bacon-based blend. For example, in embodiments, vegetables, fruits, cheese, grains, ancient grains, legumes, vitamins, minerals, and/or additives may be provided in powdered form, or as a powder blend pre-mix of two or more ingredients (for example, a powder blend pre-mix of fruits and vegetables, or a powder blend pre-mix of grains, ancient grains, and/or legumes, or a powder blend pre-mix of vitamins and minerals, which may include one or more natural antioxidants as described herein).

Optionally, the one or more additional ingredients may be shredded, minced, sieved, or diced (collectively, "shredded") prior to mixing with the bacon starting material. In embodiments, the one or more additional ingredients are shredded to provide a predetermined desired particle size of the one or more additional ingredients. Optionally, the one or more additional ingredients are shredded separately or together.

In one embodiment, a method for manufacturing a shelf-stable bacon-based food or meat product is provided, the method comprising: (a) selecting a bacon starting material having a linoleic acid concentration of about 14% (w/w) or less of the total fatty acid content; (b) mixing the selected bacon starting material with at least one natural antioxidant and optionally one or more additional ingredients to provide a bacon-based blend; and (c) freeze-drying the bacon-based blend to provide a shelf-stable bacon-based food or meat product. In embodiments, the method is suitable for use in manufacturing any of the products disclosed herein, illustratively including a bacon treat, a bacon topper, a bacon balanced diet, a mixed kibble product, or other product for human or animal consumption.

Optionally, the bacon starting material is cooked prior to mixing with the antioxidant(s) and any additional ingredients. Various cooking methods employing dry heat, moist heat, or combinations thereof are suitable for use in the instantly disclosed products and methods. Dry heat does not use water and includes broiling, searing, sautéing, pan frying, deep-fat frying, griddling, pan smoking, baking, stir frying, grilling, barbequing, and roasting. When heat is applied to the food, the food cooks in its own juices or water added to the food during its preparation evaporates during the heating process, thereby cooking the food. Heat is applied directly to the food by way of convection, directly cooking the food product. Browning is best achieved with dry heat cooking.

Moist heat employs liquid as a medium to cook the food. Such medium may include water, cream, or oil, for example. Liquids are added to the food before heat is applied, or heat is applied to the liquid before the food is added to the cooking vessel. Moist heat methods include, but are not limited to, poaching, blanching, simmering, boiling, and pressure cooking.

Combination cooking is a method that incorporates both dry and moist heat cooking, such as braising, stewing, and sous vide. In embodiments the cooking method suitable for use in the presently disclosed methods is selected from the group consisting of baking and sous vide cooking. In a specific embodiment, the cooking method is sous vide.

Sous vide (French for "under vacuum") is a cooking technique that utilizes precise temperature control to cook vacuum-sealed food. In embodiments, temperature control is achieved by cooking the sealed package in a water bath, as the temperature of the surrounding water may be substantially controlled to known constant values. For example, in heating water to boil, the temperature of the water remains relatively constant at least until such time as a substantial entirety of the water passes from liquid to vapor phase. In specific embodiments, the bacon starting material is cooked via a sous vide technique, optionally prior to mixing with any other ingredients. Additional pork or other meat products may also be cooked via sous vide, or another cooking method selected for the particular protein choice.

Optionally, the bacon starting material and any additional meat to be included in the end-product are subjected to grinding prior to mixing with the antioxidant(s) and any additional ingredients. In embodiments, the bacon starting material and any additional meat are cooked prior to grinding. In embodiments, the bacon starting material and any additional meat are ground prior to cooking. In embodiments, the cooking step may be omitted and the bacon starting material and any additional meat may simply be ground prior to the mixing step. In embodiments, the bacon starting material and any additional meat are ground together to provide a predetermined desired particle size.

In embodiments, it is desirable to drain any residual broth from the cooked bacon and additional meat prior to proceeding to grinding or mixing. Optionally, drained broth may be retained and added back to the product as an additional ingredient during grinding or mixing.

In embodiments, it is desirable to allow the cooked bacon and any additional cooked meat to cool, for example, to about 40° F, prior to grinding and/or mixing to provide a bacon-based blend.

In order to enhance food safety, in embodiments the bacon-based blend is subjected to high pressure processing (also called high pressure pasteurization, or HPP) after mixing and prior to freeze-drying. In such embodiments, the bacon-based blend is processed under high pressure, thereby killing or inactivating certain microorganisms that may be present the product. Advantageously, HPP preserves and sterilizes the bacon-based blend without negatively impacting organoleptic or nutritional properties of the product. In embodiments, the bacon starting material is cooked prior to mixing and HPP. In other embodiments, the cooking step is omitted and HPP is employed to safely process the bacon-based blend. In embodiments, a completed product (treat, topper, balanced diet, or mixed kibble product) may undergo HPP to satisfy quality control measures after freeze-drying.

In embodiments, the bacon-based blend is shaped prior to freeze-drying. For example, in certain embodiments it is desirable to extrude, mold, roll, cut, or otherwise shape the bacon-based blend to form kibble, strips, nuggets, pellets, chunks, balls/spheres, or any other desired shape or mixture of shapes.

In embodiments, the bacon-based blend is quick-frozen prior to the freeze-drying step. In a specific embodiment, the bacon-based blend is shaped and then quick-frozen for a predetermined freeze time, prior to freeze-drying. After freeze-drying, the product may undergo quality control testing during a product holding period, after which the product is packaged for shipment, storage, and ultimately sale.

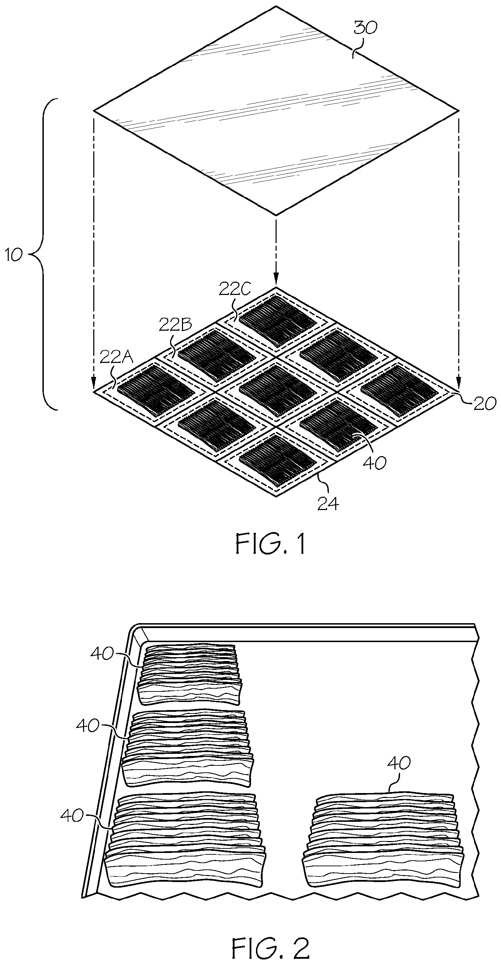

Referring to FIG. 1, a notional view of a food sealing assembly is shown, where a package 10 made from a food-grade material (such as polyethylene terephthalate (PETE), polypropylene (PP), low-density polyethylene (LDPE) and high-density polyethylene (HDPE)) is made from a lower sheet 20 and an upper sheet 30 such that when joined together the lower sheet 20 and an upper sheet 30 form an enclosure for placement of a protein-rich food product 40 that is presently shown in the form of a slab. While vacuum sealing is more easily achieved if the bacon or other protein-rich food product 40 is in larger bulk form such as that depicted in FIG. 1, it will be appreciated that all such shapes are deemed to be within the scope of the present disclosure. For example, the bacon or other protein-rich food product 40 may also be provided in other shapes, such as numerous individual strips. It will likewise be appreciated that such protein-rich food product 40 may include any protein-rich food product 40, including those made from other pork products, beef, chicken, vegetables or the like, as well as any raw material precursors of such products that may exist in a precooked condition, irrespective of shape. Within the present context, the protein-rich food product 40 discussed herein as being placed into the package 10 for subsequent sous vide or related cooking and processing may be in its substantially cooked or raw material/uncooked form, and that the use of the term "food product" will be understood to include these and all such variants of ingredients, degree of doneness, curing or other attributes as being within the scope of the present disclosure.

In one embodiment, the food-grade plastics are thermoplastic materials such that they can be joined together using known techniques, such as heat-sealing or the like. In one embodiment, lower sheet 20 may be defined by a payload region 22 and a sealing region 24. The payload region 22 may be divided into numerous shaped regions 22A, 22B, 22C ... 22N that can be arranged as a repeating array or other form conducive for both the automated placement of the protein-rich food product 40 and the formation of the package 10. While presently shown as squares, it will be appreciated that other regularly-repeating or irregular patterns may be defined, and that all such variants are deemed to be within the scope of the present disclosure. Moreover, it will likewise be appreciated that although the configuration depicted in FIG. 1 is set up for larger-scale automated preparation and packaging (such as through a conveyor-based process), other ways of placing the protein-rich food product 40 into the package 10 are contemplated (such as through gravity-feeding, manual placement or the like), and as such are within the scope of the present disclosure. In one form, the sealing region 24 forms a border around the perimeter of each of the shaped regions 22A, 22B, 22C ... 22N such that upon a heat sealing, adhesive or related operation that is used to provide a sealable enclosure, the protein-rich food product 40 is substantially isolated from the ambient environment, particularly in situations where such environment includes oxygen. When heat sealing is used, a seam sealing form as shown along the sealing region 24 promotes the formation of discrete enclosures that result in a repeating array of joined containers, each of which is hermetically sealed from one another.

It will be appreciated that while the package 10 that results from the heat sealing of the lower sheet 20 to the upper sheet 30 with the protein-rich food product 40 placed between them is shown as having a rectangular configuration, other configurations that are not shown are also possible, including a substantially oval-shaped package 10, a substantially round-shaped package 10, as well as various other geometric or irregular-shapes. It will further be appreciated that all such variants are deemed to be within the scope of the present disclosure.

In embodiments, the package 10 is subjected to sous vide, whereby precise temperature control is achieved by cooking the package 10 in a water bath.

As mentioned previously in conjunction with FIG. 1, the various stages may also be performed on bacon or other protein-rich food product 40 that is a slab or related bulk form. In particular, FIG. 2 shows numerous slices of bacon that have been refrigerated at 35° F and cut down to a length sufficient for placement into a rectangular-shaped vacuum sealer cooking bag and grouped into batches of approximately 8-12 strips.

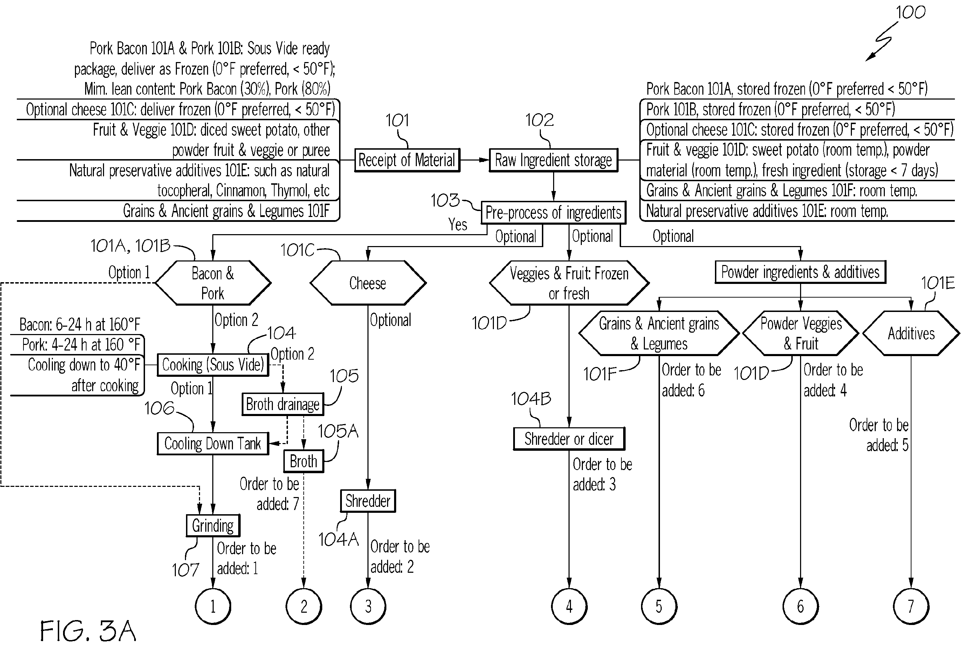

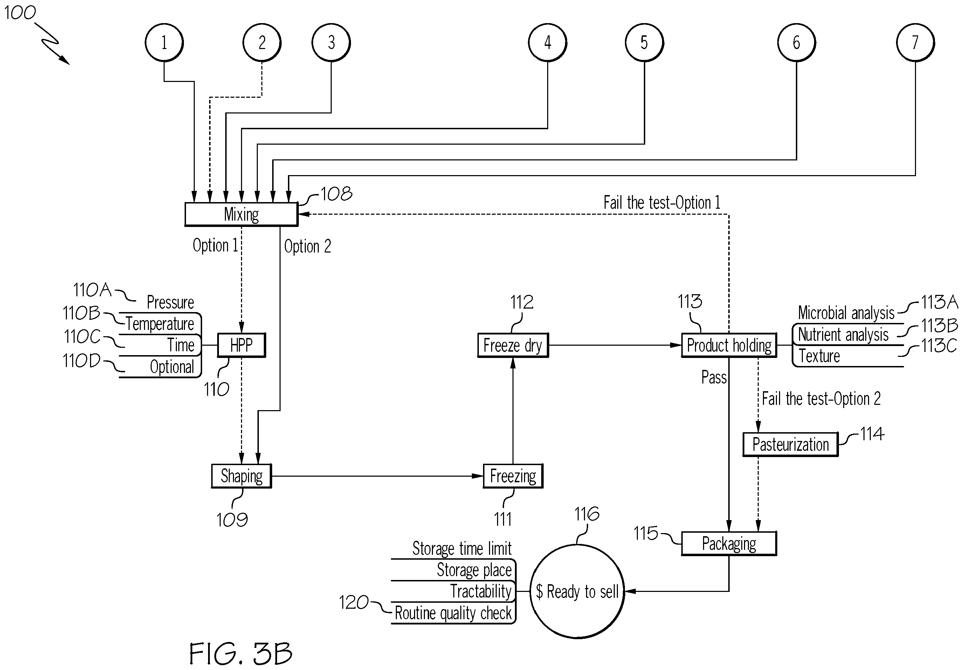

Referring to FIGS. 3A, 3B, a flow diagram depicting at least some of the steps associated with an exemplary bacon treat production flow chart 100 and subsequent processing according to an aspect of the present disclosure is shown. The bacon treat product is suitable for human or pet consumption and retains the desirable organoleptic properties of bacon. The bacon treat food product with extended shelf life as described in FIGS. 3A, 3B may be of a general formula, including but not limited to 15-35% pork bacon, 10-34% pork (shoulder, loin, trim or other parts), 10-34% cheese, 10-34% grains, 10-20% vegetable and fruit; 0.1-1% prebiotic and 0.1-1% antioxidants. The steps of flow chart 100 are discussed in further detail herein below.

First, receipt of material 101, including but not limited to: pork bacon 101A, illustratively having a minimum lean content of 30% and delivered frozen (0° F) or at a reduced temperature of < 50° F; pork 101B, illustratively having a minimum lean content of 80% and delivered frozen (0° F) or at a reduced temperature of < 50° F, including pork shoulder, pork loin, or pork trim, etc.; optionally cheese 101C, optionally delivered frozen (0° F) or at a reduced temperature of < 50° F, optionally comprising shredded low fat cheddar cheese; fruit and vegetables 101D, including blends of multiple fruits and/or vegetables, such as carrots, potatoes, sweet potatoes, and the like, optionally diced, shredded, pureed, or received in fresh, frozen, or powdered forms; natural additives, such as natural tocopherols, cinnamon, thymol, etc. 101E; and grains, ancient grains, and legumes 101F, which may be raw or precooked, powdered, flaked, granulated, etc.

It should be appreciated that other types and forms of cheese or egg products may be used as a replacement for the low-fat cheddar cheese 101C described in this and other embodiments disclosed herein.

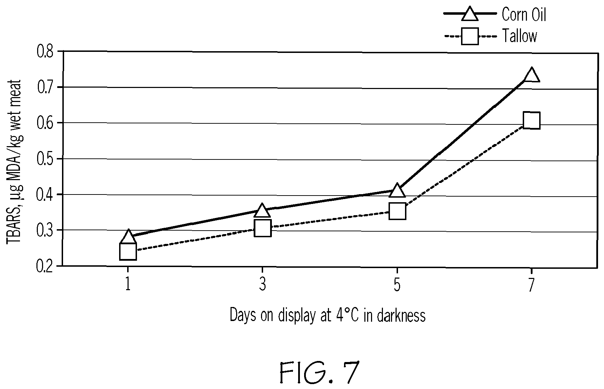

Other protein-rich food products may be used in the presently disclosed methods if such products contain a low peroxide value, i.e., less than 20 mEq/kg. Importantly, pork bacon suitable for use in the disclosed embodiments may advantageously be sourced from hogs that are fed a diet without fat addition or diets containing a higher concentration of saturated fat (such as tallow, lard, and coconut oil, particularly a diet wherein the linoleic acid concentration is preferably less than about 11% (w/w) of total fatty acids), as opposed to hogs that are fed diets having high content of corn byproducts (such as regular high fat distiller's dried grains with solubles). If hogs are fed a diet that is too high in unsaturated fat intake, the resulting pork belly composition is undesirably soft, leading to a reduced shelf life of the end-product, as shown in FIG. 7. This may have a significant impact on the quality of protein-rich food product 40 with respect to cost, resistance to rancidity, extended shelf life, and desirable organoleptic properties. The acceptable bacon starting material should have an iodine value less than 65 g/100 g fat, and the linoleic acid (C18:2) concentration should be less than about 14% (w/w) of total fatty acids.

Fruit and vegetables 101D may also include other vegetables and fruits, such as leafy vegetable, berries, or extruded barley. In another optional form (not shown), antioxidants may be added (such as by spraying, tumbling or the like) in order to reduce or remove free-radical oxygen-containing substances. Such an optional step may be introduced along any of the steps depicted in FIG. 3 as long as efficiency, practicality and efficacy of such addition is maximized.

Ingredients such as grains, ancient grains, and legumes 101F may be provided in precooked or in powder form, including but not limited to oatmeal, an extruded oat mixture, or brown rice. In embodiments, ingredients 101F are selected to give the food product other desirable attributes, such as texture, color, or flavor such as tartness, saltiness, sweetness, bitterness, or the like.

Natural additives 101E may include, but are not limited to, mixed tocopherols, cinnamon, thymol, inulin, apple cider vinegar, thymol, eugenol, carvacrol, caprylic acid, and cinnamon leaf oil, and the like.

Raw ingredients enter raw ingredient storage 102, wherein pork bacon 101A, pork 101B, and cheese 101C are preferably stored frozen (0° F), or in a cooler having a temperature < 50° F. Vegetables and fruits 101D are stored depending on their specific property, for example: leafy vegetable should be stored frozen (0° F) or at a reduced temperature of < 50° F); berries should be stored frozen (0° F) or at a reduced temperature of < 50° F); sweet potato should be stored according to the anticipated duration of storage (≤ 1 week storage, room temperature (∼70° F) and dry environment, and > 1 week of storage, frozen, (0° F) or at a reduced temperature of < 50° F)); vegetable and fruit powder can be stored at room temperature (∼70° F) in a dry environment. The natural preservative additives 101E may be stored at room temperature (∼70° F). Grains, ancient grains, and legumes 101F are stored at room temperature (∼70° F); and natural preservative additives 101E, such as natural mixed tocopherols, are sealed and stored at room temperature (∼70° F).

Raw ingredients then undergo pre-processing 103, wherein: the pork bacon 101A, the pork 101B, the cheese 101C, and the vegetables and fruits 101D may be subjected to various additional processing steps prior to mixing to form the bacon-based blend.

The cheese 101C may undergo shredding 104A. Fresh and frozen fruits and vegetables 101D may undergo shredding or dicing 104B.

In embodiments, pork bacon 101A and pork 101B undergo a cooking step 104, which may be accomplished by any of the cooking methods or techniques disclosed herein. While sous vide cooking is depicted in FIGS. 3A-3B, the skilled artisan will appreciate that other methods of cooking are also suitable for use in the instant methods. A suitable cooking temperature is 140° F, optionally 160° F in order to ensure desired product safety parameters. In the exemplified sous vide cooking method, pork bacon 101A is cooked for 6-24 hours at 160° F in a sous vide cooker, depending on the heating efficiency of the cooker; pork 101B is cooked for 4-24 hours at 160° F in a sous vide cooker, depending on heating efficiency of the cooker. Optionally, the cooking step may be omitted and the pork bacon 101A and pork 101B may pass directly to grinding 107.

Optionally, the broth 105A is drained 105 from the cooked pork bacon 101A and pork 101B after the cooking step is completed. Optionally, the drained broth 105A may retained and added back into the mixture at a later processing step.

The cooked pork bacon 101A and pork 101B then undergo a cooling step 106, whereby the pork bacon 101A and pork 101B are immersed in a quick-cooling tank to rapidly cool the pork bacon 101A and the pork 101B to a target temperature of about 40° F, or to a temperature less than about 50° F.

The cooled or uncooked pork bacon 101A and pork 101B are then subjected to grinding 107 to yield a particle size of less than 1/6 inch, preferably less than 1/8 inch, or less than 3.2 mm, optionally adding drained broth 105A. Grinding 107 results in product grinding loss of < 5%. Leftover ground pork bacon 101A and pork 101B may be stored for a short term (< 2 days) at 40° F. Additionally, leftover cheese 101C and sweet potato 101D may be stored for a short term (< 2 days) at 0° F.

Once cooled, the pork bacon 101A and pork 101B passes to the mixing step 108, resulting in product mixing loss of < 5%. The mixer is turned to the OFF position, followed by adding the ingredients into the mixer, illustratively in the following order:
(1) Ground pork bacon 101A and ground pork 101B;
(2) Cheese 101C;
(3) Fresh or frozen fruits and vegetables 101D;
(4) Powdered fruit and vegetables 101D;
(5) Additives 101E;
(6) Grains, ancient grains, and legumes 101F;
(7) Optionally, broth 105A;

During mixing 108, the mixture is mixed for a mixing time of at least 3 minutes, more specifically about 10 minutes once all ingredients are added. The mixed ingredients are hereinafter referred to interchangeably as the bacon-based blend.

Optionally, the mixed food product (i.e., bacon-based blend) is subjected to high-pressure processing (HPP) 110 prior to shaping 109. In embodiments, the processing pressure 110A is > 8000 PSI, and temperature 110B may vary between 32 and 50° F, and time duration 110C may vary from 85 seconds to 10 min depending on pH and water activity of the mixture. In a more particular embodiment, the HPP processing pressure is 80,000 or greater PSI for no less than 180 second cycle at a temperature of about 40° F. Alternatively, other pasteurization processes 110D may be employed to meet food safety standards.

The mixed food product (bacon-based blend) is shaped 109 into the desired shape, such as pellets, nuggets, strips, balls, and the like. Shaping may be accomplished via a form mold, roller, extruder, or like instrument to produce the desired shaped product. In embodiments, the desired diameter may vary from 0.5-1 inch for a ball shaped product, or the bacon-based blend may be diced into 0.25-1 inch cubes.

The shaped food product may then be subjected to quick freezing 111. Quick freezing may be accomplished by a variety of equipment known in the art, such as a spiral freezer or a liquid nitrogen freezer. It is understood that batch size will differ depending on the freezing method selected. Freezing time for the shaped product is sufficient to fully freeze the product (e.g., about 1 min or longer).

The frozen, shaped food product is then subjected to freeze-drying 112 so that lyophilization-based moisture removal takes place. The freeze-drying step 112 comprises 0-12 hours of freeze time and illustratively two gradient dry temperatures, at 140° F and 160° F. The defrost time of the process is greater than 2 hours, in order to prepare the equipment for a subsequent run. The resultant product comprises an overall moisture content below about 6% by weight, which is suitable for an extended room-temperature shelf life, while still exhibiting adequate resistance to crumbling under normal handling conditions. In one embodiment, the moisture level of the freeze-dried food product at this stage of the processing is below about 6% by weight. In another embodiment, the moisture level of the freeze-dried food product is below about 5% by weight. In yet another embodiment, the moisture level of the freeze-dried food product is between about 5% and about 6% by weight. In embodiments, the freeze-drying 112 promotes sublimation as a way to remove of excess moisture.

The product may then pass to a product holding step 113 for analysis, including one or more of microbial analysis 113A (e.g., E. coli (results should be negative), Salmonella (results should be negative), Listeria (results should be negative)); nutrient analysis 113B, including one or more of moisture content (having a target of 4% - 8%), crude protein (having a target > 25%), and crude fat (having a target of < 25%)); and texture analysis 113C, including one or more of color, shape, hardness, and surface. Microbial and nutrient analysis is preferably completed by staff trained in quality control.

Optionally, the product is pasteurized 114 after product holding 113, if the product yields a positive microbial analysis result 113A. Suitable methods of pasteurization include microwave or macrowave treatment, gamma ray irradiation, UV light irradiation, and the like. Alternatively, if the product fails the product holding 113 nutrient analysis 113B, the product may optionally be returned to mixing step 108 to modify the nutritional profile of the blended formulation.

After product holding, the completed product may then be packaged 115 for storage and shipment, for example in a pouch or tub. The size of package may vary from about 4 oz. to about 24 oz. or more, depending on the shape and size of the product and the intended use, among other considerations. In one embodiment, such packaging may be suitable for bulk shipment (such as at a wholesale level), while in another embodiment, the product is packaged in individual containers for sale to consumers. In embodiments, the product is packaged at a production rate determined to meet supply chain demands.

The packaged bacon treat product is then suitable for sale 116, wherein the anticipated shelf life of the packaged product is at least about 12 months, optionally about 18 months to 2 years, when stored in a cool, dry storage space.

Tractability and routine quality checks 120 are optionally carried out, including sampling the packaged bacon treat food products monthly for quality monitoring, such as shape retention, resistance to rancidity, microbial analysis, and lipid oxidation analysis.

Dependent on the protein-rich food products received in the bacon treat production flow chart 100, a variety of final products may be produced such as a low-cost final product as well as a high-quality final product, for example, the high-quality final product having reduced sodium or fat levels, as compared to the low-cost final product.

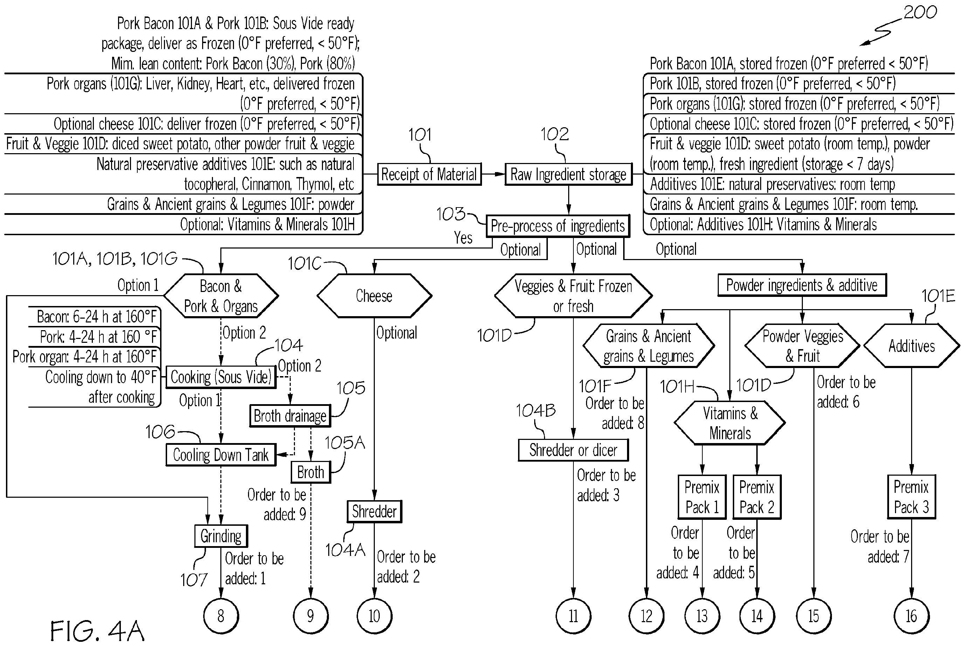

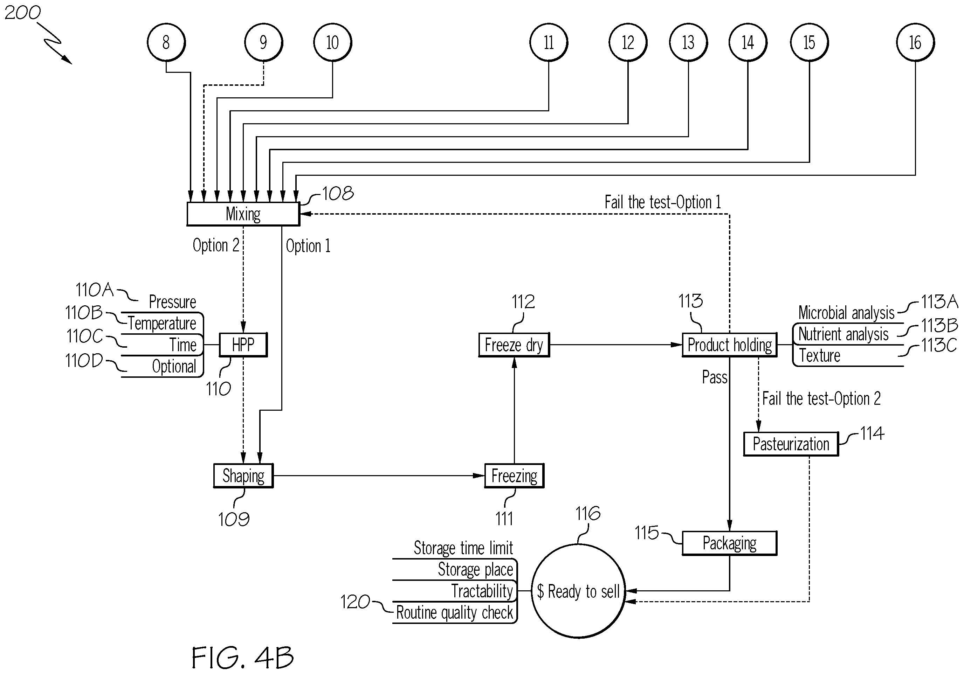

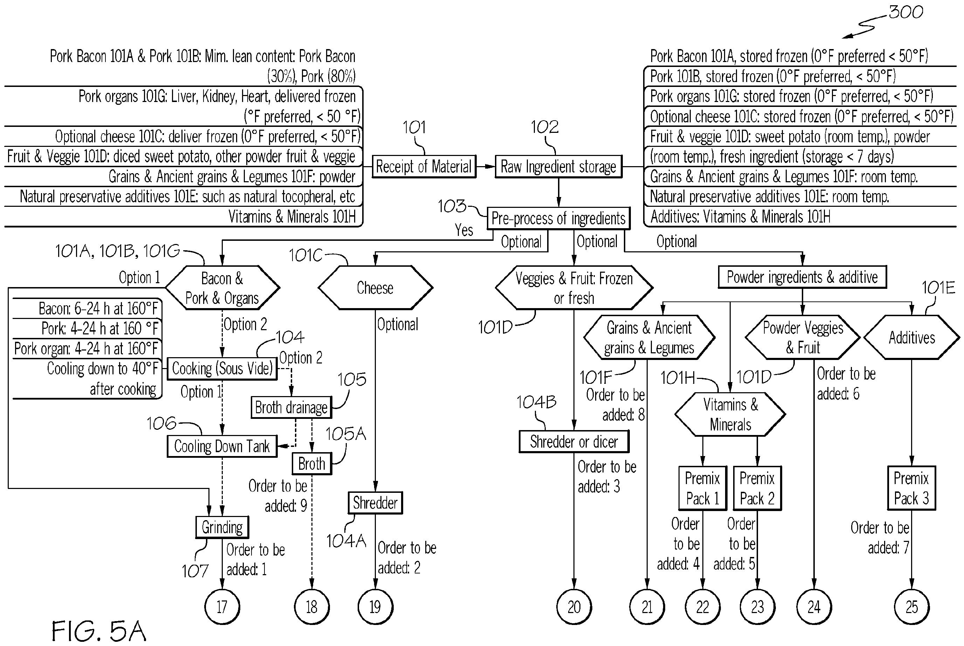

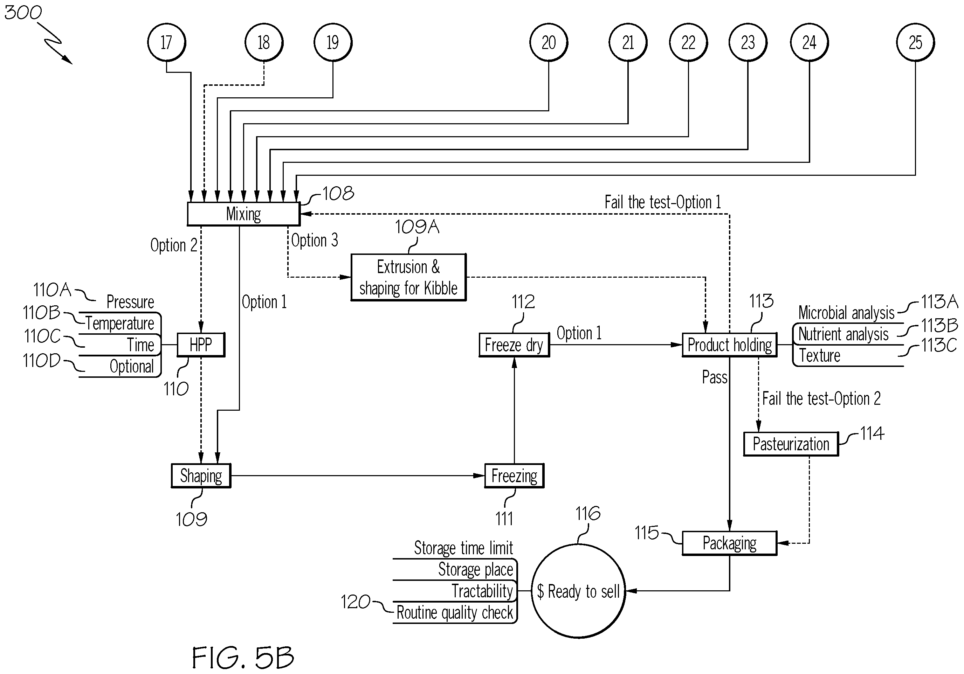

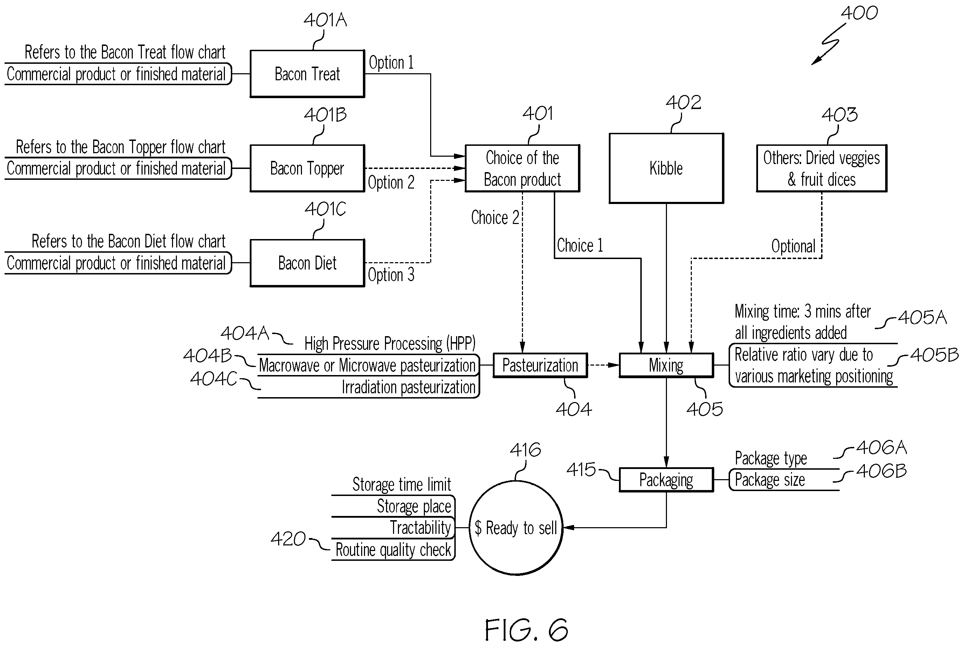

While the flow chart set forth in FIGS 3A and 3B is directed to the manufacture of a bacon treat product, the process may be modified to provide additional products, such as a bacon topper product for enhancing a pet's diet (FIGS. 4A and 4B), a bacon-based balanced product (e.g.,, kibble-type pet food) (FIGS. 5A and 5B), or a mixed kibble product, comprising at least one bacon-based product and optionally other ingredients (FIG. 6).

Referring to FIGS. 4A, 4B, a flow diagram depicting at least some of the steps associated with an exemplary bacon topper production flow chart 200 and subsequent processing according to an aspect of the present disclosure is shown. The bacon topper product is suitable for human or pet consumption and retains the desirable organoleptic properties of bacon. The bacon topper food product with extended shelf life as described in FIG. 4A & 4B may be of a general formula, including but not limited to 10-45% pork bacon, 8-40% pork (shoulder, loin, trim or other parts), 5-20% pork liver, 5-20% pork kidney, 5-20% pork heart, 10-20% cheese, 10-30% grains (e.g., brown rice, oatmeal, pea, and etc.), 10-20% vegetable and fruit (or 1-5% powder vegetables and fruit); 0.1-1% prebiotic and 0.1-1% antioxidants, 0.01-5% vitamin & mineral premix, and 0.0-1% multivitamin pre-mix Vionate® (MiracleCorp Products, Dayton, OH).

The steps of flow chart 200 are discussed in further detail herein below.

First, receipt of material 101, including but not limited to: pork bacon 101A, pork 101B, pork organs (such as liver, kidney, heart, and the like) 101G, optionally delivered frozen or at a temperature of < 50° F; optionally cheese 101C; fruit and vegetables 101D including diced sweet potato and other powdered fruits and vegetables; natural preservative additives 101E; and grains, ancient grains, and legumes 101F; and optionally vitamins and minerals 101H.

Raw ingredients enter raw ingredient storage 102, wherein pork bacon 101A, pork 101B, pork organs 101G, and cheese 101C, if present, are preferably stored frozen (0° F), or in a cooler having a temperature < 50° F. Vegetables and fruits 101D, natural preservative additives 101E, and grains, ancient grains, and legumes 101F, and optional additives (vitamins and minerals) 101H are stored as previously described.

Raw ingredients then undergo pre-processing 103, wherein: the pork bacon 101A, pork 101B, pork organs 101G, cheese 101C, frozen and fresh vegetables and fruits 101D, grains and ancient grains 101F, vitamins and minerals 101H, powdered fruits and vegetables 101D, and additives 101E may be subjected to various additional processing steps prior to mixing to form the bacon-based blend.

The cheese 101C may undergo shredding 104A. Fresh and frozen fruits and vegetables 101D may undergo shredding or dicing 104B.

Vitamins and minerals 101H and additives 101E may be divided into premix packs, as desired, for addition at the mixing step 108.

Optionally, pork bacon 101A, pork 101B, and pork organs 101G undergo a cooking step 104, which may be accomplished by any of the cooking methods or techniques disclosed herein. While sous vide cooking is depicted in FIGS. 4A-4B, the skilled artisan will appreciate that other methods of cooking are also suitable for use in the instant methods. In the exemplified sous vide cooking method, pork bacon 101A, pork 101B, and pork organs 101G are cooked for 6-24 hours at 160° F in a sous vide cooker, depending on the heating efficiency of the cooker. In embodiments, the cooking step may be omitted and the pork bacon, pork, and pork organs may pass directly to grinding 107 without a cooking step.

Optionally, the broth 105A is drained 105 from the cooked pork bacon 101A, pork 101B, and pork organs 101G after the cooking step is completed. The broth may optionally be reserved to add back into the product at a later step.

The cooked pork bacon 101A, pork 101B, and pork organs 101G optionally undergo a cooling step 106, whereby the pork bacon, pork, and pork organs are immersed in a quick-cooling tank to rapidly cool the ingredients to a target temperature of about 40° F, or to a temperature less than about 50° F.

The cooled pork bacon 101A, pork 101B, and pork organs 101G are then subjected to grinding 107 to yield a particle size of less than 1/6 inch, preferably less than 1/8 inch, or less than 3.2 mm.

Once ground, the pork bacon 101A, pork 101B, and pork organs 101G pass to the mixing step 108, resulting in product loss of < 5%. Ingredients are added to the mixer, illustratively in the following order:
(1) Ground pork bacon 101A, ground pork 101B, and ground pork organs 101G;
(2) Cheese 101C;
(3) Fresh or frozen fruits and vegetables 101D;
(4) Vitamins and minerals 101H, optionally provided as one or more premixes added sequentially;
(5) Powdered fruit and vegetables 101D;
(6) Natural preservative additives 101E;
(7) Grains, ancient grains, and legumes 101F;
(8) Optionally, broth 105A;

During mixing 108, the mixture is mixed for at least 3 minutes, more specifically about 10 minutes once all ingredients are added. The mixed ingredients are hereinafter referred to interchangeably as the bacon-based blend.

Optionally, the mixed food product (i.e., bacon-based blend) is subjected to high-pressure processing (HPP) 110 prior to shaping 109. In embodiments, the processing pressure 110A is > 8000 PSI, and temperature 110B may vary between 32 and 50° F, and duration time 110C may vary from 85 seconds to 10 min depending on pH and water activity of the mixture. In a more particular embodiment, the HPP processing pressure is 80,000 or greater PSI for no less than 180 second cycle at a temperature of about 40° F. Alternatively, other pasteurization processes 110D may be employed to meet food safety standards.

The mixed food product (bacon-based blend) is shaped 109 into the desired shape, such as pellets, nuggets, strips, balls, and the like. Shaping may be accomplished via a form model, roller, extruder, or like instrument to produce the desired shaped product. In embodiments, the desired diameter may vary from 0.5-1 inch for a ball shaped product, or the bacon-based blend may be diced into 0.25-1 inch cubes.

The shaped food product is then subjected to quick freezing 111, as previously described, followed by freeze-drying 112, as previously described.

The product may then pass to a product holding step 113 for analysis, including one or more of microbial analysis 113A, nutrient analysis 113B, and texture analysis 113C. Microbial and nutrient analysis is preferably completed by staff trained in quality control.

Optionally, the product is pasteurized 114 after product holding 113, if the product yields a positive microbial analysis result 113A. Suitable methods of pasteurization include microwave or macrowave treatment, gamma ray irradiation, UV light irradiation, and the like. Alternatively, if the product fails the product holding 113 nutrient analysis 113B, the product may optionally be returned to mixing step 108 to modify the nutritional profile of the blended formulation.

The completed product may then be packaged 115 for storage and shipment, as described above. The packaged bacon treat product is then suitable for sale 116, wherein the anticipated shelf life of the packaged product is at least about 12 months, optionally about 18 months to 2 years, when stored in a cool, dry storage space.

Tractability and routine quality checks 120 are optionally carried out, including sampling the packaged bacon treat food products monthly for quality monitoring, such as shape retention, resistance to rancidity, microbial analysis, and lipid oxidation analysis.

Referring to FIGS. 5A, 5B, a flow diagram depicting at least some of the steps associated with an exemplary bacon-based balanced diet production flow chart 300 and subsequent processing according to an aspect of the present disclosure is shown. The bacon balanced diet product is suitable for human or pet consumption and retains the desirable organoleptic properties of bacon. The bacon diet food product with extended shelf life may be of a general formula, including but not limited to 5-25% pork bacon, 5-24% pork (shoulder, loin, trim, or other parts), 2-20% pork liver, 2-20% pork kidney, 2-20% pork heart, 2-20% cheese, 10-50% grains (e.g., brown rice, oatmeal, barley, peas, beans, etc.), 10-20% vegetable and fruit (or 1-5% powder vegetables and fruit), and 0.1-1% prebiotic and 0.1-1% antioxidants, 0.01-5% vitamin and mineral premix, and 0.0-1% multivitamin pre-mix Vionate® (MiracleCorp Products, Dayton, OH). The steps of flow chart 300 are discussed in further detail herein below.

First, receipt of material 101, including but not limited to: pork bacon 101A, pork 101B, pork organs 101G; optionally cheese 101C; fruit and vegetables 101D including diced sweet potato and other powdered fruits and vegetables; natural preservative additives 101E; and grains, ancient grains, and legumes 101F; and vitamins and minerals 101H.

Raw ingredients enter raw ingredient storage 102, wherein pork bacon 101A, pork 101B, pork organs 101G, cheese 101C, vegetables and fruits 101D, natural preservative additives 101E, grains, ancient grains, and legumes 101F, and vitamins and minerals 101H are stored as previously described.

Raw ingredients then undergo pre-processing 103, wherein: the pork bacon 101A, pork 101B, pork organs 101G, cheese 101C, frozen and fresh vegetables and fruits 101D, grains and ancient grains 101F, vitamins and minerals 101H, powdered fruits and vegetables 101D, and additives 101E may be subjected to various additional processing steps prior to mixing to form the bacon-based blend.

The cheese 101C may undergo shredding 104A. Fresh and frozen fruits and vegetables 101D may undergo shredding or dicing 104B.

Vitamins and minerals 101H and powdered fruits and vegetables 101D may be divided into premix packs, as desired, for addition at mixing step 108.

Optionally, pork bacon 101A, pork 101B, and pork organs 101G undergo a cooking step 104, which may be accomplished by any of the cooking methods or techniques disclosed herein. While sous vide cooking is depicted in FIGS. 5A-5B, the skilled artisan will appreciate that other methods of cooking are also suitable for use in the instant methods. In the exemplified sous vide cooking method, pork bacon 101A is cooked for 6-24 hours at 160° F in a sous vide cooker, and the pork 101B and pork organs 101G are cooked for 4-24 hours at 160° F in a sous vide cooker, depending on the heating efficiency of the cooker. In embodiments, the cooking step may be omitted and the pork bacon, pork, and pork organs may pass directly to grinding 107 without a cooking step.

Optionally, the broth 105A is drained 105 from the cooked pork bacon 101A, pork 101B, and pork organs 101G after the cooking step is completed. The broth may optionally be reserved to add back into the product at a later step.

The cooked pork bacon 101A, pork 101B, and pork organs 101G optionally undergo a cooling step 106, whereby the pork bacon, pork, and pork organs are immersed in a quick-cooling tank to rapidly cool the ingredients to a target temperature of about 40° F, or to a temperature less than about 50° F.

The cooled pork bacon 101A, pork 101B, and pork organs 101G are then subjected to grinding 107 to yield a particle size of less than 1/6 inch, preferably less than 1/8 inch, or less than 3.2 mm.

Once ground, the pork bacon 101A, pork 101B, and pork organs 101G pass to the mixing step 108, resulting in product loss of < 5%. Ingredients are added to the mixer in the following illustrative order:
(1) Ground pork bacon 101A, ground pork 101B, and ground pork organs 101G;
(2) Cheese 101C;
(3) Fresh or frozen fruits and vegetables 101D;
(4) Vitamins and minerals 101H, optionally provided as one or more premixes added sequentially;
(5) Natural preservative additives 101E;
(6) Powdered fruit and vegetables 101D;
(7) Grains, ancient grains, and legumes 101F;
(8) Optionally, broth 105A;

During mixing 108, the mixture is mixed for at least 3 minutes, more specifically about 10 minutes once all ingredients are added. The mixed ingredients are hereinafter referred to interchangeably as the bacon-based blend.

Optionally, the mixed food product (i.e., bacon-based blend) is subjected to high-pressure processing (HPP) 110, as previously described, prior to shaping 109.

The mixed food product (bacon-based blend) is shaped 109 into the desired shape as previously described, such as pellets, nuggets, strips, balls, and the like. Shaping may be accomplished via a form model, roller, extruder, or like instrument to produce the desired shaped product. In embodiments, the desired diameter may vary from 0.5-1 inch for a ball shaped product, or the bacon-based blend may be diced into 0.25-1 inch cubes.

Optionally, the bacon-based blend undergoes extrusion and shaping for kibble 109A, which is suitable for shaping a relatively more dry mixture. Extrusion and shaping 109A typically comprises a heating process (e.g., steam conditioning), extrusion, die pelleting, and cooling. The shaped pieces may pass directly to product holding 113 without undergoing quick-freezing 111 or freeze-drying 112.

The shaped food product may then be subjected to quick freezing 111, as previously described, followed by freeze-drying 112, as previously described.

After freeze-drying 112, or after extrusion of shaping for kibble 109A, the product passes to a product holding step 113 for analysis, including one or more of microbial analysis 113A, nutrient analysis 113B, and texture analysis 113C. Microbial and nutrient analysis is preferably completed by staff trained in quality control.

Optionally, the product is pasteurized 114 after product holding 113, if the product yields a positive microbial analysis result 113A. Suitable methods of pasteurization include microwave or macrowave treatment, gamma ray irradiation, UV light irradiation, and the like. Alternatively, if the product fails the product holding 113 nutrient analysis 113B, the product may optionally be returned to mixing step 108 to modify the nutritional profile of the blended formulation.

The completed product may then be packaged 115 for storage and shipment, as described above. The packaged bacon treat product is then suitable for sale 116, wherein the anticipated shelf life of the packaged product is at least about 12 months, optionally about 18 months to 2 years, when stored in a cool, dry storage space.

Tractability and routine quality checks 120 are optionally carried out, including sampling the packaged bacon treat food products monthly for quality monitoring, such as shape retention, resistance to rancidity, microbial analysis, and lipid oxidation analysis.

Referring to FIG. 6, a flow diagram depicting at least some of the steps associated with an exemplary bacon-based mixed kibble production flow chart 400 and subsequent processing according to an aspect of the present disclosure is shown. The bacon mixed kibble product is suitable for human or pet consumption and retains the desirable organoleptic properties of bacon. The steps of flow chart 400 are discussed in further detail herein below.

One or more products selected from a bacon treat 401A, a bacon topper 401B, or a bacon balanced diet 401C may be selected 401 for incorporation into a mixed kibble product. Optionally, the one or more chosen bacon products are subjected to a pasteurization step 404, such as HPP 404A, macrowave or microwave pasteurization 404B, irradiation pasteurization 404C, or the like, prior to passing to mixing step 405.

The selected bacon product(s) 401 are then passed to the mixing step 405, wherein the bacon products are combined with kibble 402 and, optionally, other dried or diced fruits and vegetables 403. In embodiments, kibble 402 may include any commercially available kibble product for animal consumption. The ratio of the ingredients may vary according to the desired product parameters. For example, in embodiments, the product may comprise from 10-40% bacon product(s) 401, from 40-80% kibble 402, and from 10-20% fruits and vegetables 403.

The combined ingredients are mixed 405 for a mixing time 405A of 3 minutes or longer, once all ingredients are added. The relative ratio 405B of the different ingredients (i.e., the selected bacon product(s) 401, the kibble 402, and the optional fruits and vegetables 403) may vary according to the desired end-product. Once mixing 405 is complete, a mixed kibble product is provided, which passes to packaging step 415. Packaging is selected according to the desired packaging type 406A and size 406B, as needed for the particular product. The product is then suitable for sale 416, wherein the anticipated shelf life of the packaged product is at least about 12 months, optionally about 18 months to 2 years, when stored in a cool, dry storage space.

Tractability and routine quality checks 420 are optionally carried out, including sampling the packaged bacon treat food products monthly for quality monitoring, such as shape retention, resistance to rancidity, microbial analysis, and lipid oxidation analysis.

Embodiments can be described with reference to the following numbered clauses, with preferred features laid out in dependent clauses.
1. A method for manufacturing a shelf-stable bacon-based meat product, the method comprising:
   (a) selecting a bacon starting material having a linoleic acid concentration of about 14% (w/w) or less of total fatty acid content;
   (b) mixing the selected bacon starting material with at least one natural antioxidant and optionally one or more additional ingredients to provide a bacon-based blend; and
   (c) freeze-drying the bacon-based blend to provide a shelf-stable bacon-based meat product.
2. The method according to clause 1, further comprising cooking the selected bacon starting material prior to the mixing of step (b).
3. The method according to any of the preceding clauses, wherein cooking the selected bacon starting material comprises baking or sous vide cooking.
4. The method according to any of the preceding clauses, wherein cooking the selected bacon starting material comprises sous vide cooking.
5. The method according to any of the preceding clauses, further comprising grinding the selected bacon starting material prior to the mixing of step (b).
6. The method according to any of the preceding clauses, further comprising high pressure processing (HPP) the bacon-based blend prior to the freeze-drying of step (c).
7. The method according to any of the preceding clauses, further comprising shaping the bacon-based blend prior to the freeze-drying of step (c).
8. The method according to any of the preceding clauses, further comprising freezing the bacon-based blend prior to the freeze-drying of step (c).
9. The method according to any of the preceding clauses, wherein the bacon-based meat product is a bacon-first food product.
10. The method according to any of the preceding clauses, wherein the bacon starting material comprises cured or uncured smoked pork belly.
11. The method according to any of the preceding clauses, wherein the linoleic acid concentration of the bacon starting material is about 13% (w/w) or less of the total fatty acid content.
12. The method according to any of the preceding clauses, wherein the linoleic acid concentration of the bacon starting material is about 8% (w/w) or less of the total fatty acid content.
13. The method according to any of the preceding clauses, wherein the one or more additional ingredients are independently selected from the group consisting of pork, cheese, vegetables, fruit, grains, legumes, vitamins, minerals, additives, and combinations thereof.
14. The method according to any of the preceding clauses, wherein the at least one natural antioxidant comprises one or more natural antioxidants, selected from the group consisting of alpha tocopherol, mixed tocopherols, rosemary extract, cinnamon, thymol, vitamin C, blueberry powder, tea polyphenols, and combinations thereof; preferably wherein the at least one natural antioxidant comprises mixed tocopherols.
15. A shelf-stable bacon-based meat product manufactured by the process of any of the preceding clauses.
16. A method for manufacturing a shelf-stable bacon-based meat product, the method comprising:
   (a) selecting a bacon starting material having a linoleic acid concentration of about 14% (w/w) or less of total fatty acid content;
   (b) cooking the selected bacon starting material;
   (c) mixing the product of step (b) with at least one natural antioxidant and optionally one or more additional ingredients to provide a bacon-based blend;
   (d) shaping the bacon-based blend; and
   (e) freeze-drying the shaped bacon-based blend to provide a shelf-stable bacon-based meat product.
17. The method according to clause 16, wherein cooking the selected bacon starting material comprises baking or sous vide cooking.
18. The method according to any of clauses 16-17, wherein cooking the selected bacon starting material comprises sous vide cooking.
19. The method according to any of clauses 16-18, further comprising grinding the cooked selected bacon starting material prior to the mixing of step (c).
20. The method according to any of clauses 16-19, further comprising high pressure processing (HPP) the bacon-based blend prior to the shaping of step (d).
21. The method according to any of clauses 16-20, further comprising freezing the product of step (d) prior to the freeze-drying of step (e).
22. The method according to any of clauses 16-21, wherein the bacon-based meat product is a bacon-first food product.
23. The method according to any of clauses 16-22, wherein the bacon starting material comprises cured or uncured smoked pork belly.
24. The method according to any of clauses 16-23, wherein the linoleic acid concentration of the bacon starting material is about 13% (w/w) or less of the total fatty acid content.
25. The method according to any of clauses 16-24, wherein the linoleic acid concentration of the bacon starting material is about 8% (w/w) or less of the total fatty acid content.
26. The method according to any of clauses 16-25, wherein the one or more additional ingredients are independently selected from the group consisting of pork, cheese, vegetables, fruit, grains, legumes, vitamins, minerals, additives, and combinations thereof.
27. The method according to any of clauses 16-26, wherein the at least one natural antioxidant comprises mixed tocopherols.
28. A shelf-stable bacon-based meat product manufactured by the process of any of clauses 16-27.
29. The shelf-stable bacon-based meat product according to clause 15 or clause 28, wherein the product is selected from the group consisting of a bacon treat, a bacon meal topper, a bacon balanced diet, and a bacon mixed kibble product.

### EXAMPLES

The following examples are provided by way of illustration and are in no way intended to limit the scope of the present disclosure.

### Example 1. Exemplary Bacon Treat Formulations

The following Tables 1-3 describe a bacon-first design and various optional features of the protein-rich bacon treat food product including, but not limited to, the ingredients and estimated nutrient level that may be used in the bacon treat production flow chart **100** as described in FIGS. 3A, 3B.

**Table 1. Bacon treat formulation examples**

| | **Design** 1 | **Design 2** | **Design 3** |
|---|---|---|---|
| **Ingredient** | **% as is** | **% as is** | **% as is** |
| Pork bacon | 25.00% | 22.74% | 24.71% |
| Pork loin ground | 19.00% | 21.54% | 23.40% |
| Cheese | 19.00% | 19.10% | |
| Dried whole egg product | | | 12.11% |
| Oatmeal | 17.88% | 14.63% | 15.89% |
| Brown rice | | 14.38% | 15.62% |
| Barley | | | |
| Sweet potato | 17.88% | | |
| Vegetables and fruits | | 7.36% | 8.00% |
| Inulin | 1.00% | | |
| Apple cider vinegar | 0.13% | | |
| Natural tocopherols | | 0.12% | 0.13% |
| Cinnamon leaf oil | | 0.13% | 0.14% |
| Total | 100% | 100% | 100% |

**Table 2. Bacon treat formulation examples**

| | **Design 4** | **Design 5** |
|---|---|---|
| **Ingredient** | **% as is** | **% as is** |
| Pork bacon | 23.19% | 28.09% |
| Pork loin ground | 21.97% | 27.25% |
| Cheese | 21.63% | |
| Egg white | | 3.40% |
| Oatmeal | 13.56% | 17.79% |
| Barley | 13.53% | 17.04% |
| Vegetables and fruits | 4.93% | 5.17% |
| Inulin | 0.95% | 0.99% |
| Natural tocopherols | 0.12% | 0.13% |
| Cinnamon leaf oil | 0.13% | 0.13% |
| Total | 100% | 100% |

**Table 3. Bacon treat formulation examples**

| | **Design 6** | **Design 7** |
|---|---|---|
| **Ingredient** | **% as is** | **% as is** |
| Pork bacon | 20.0% | 19.0% |
| Pork shoulder | 19.5% | |
| Pork heart | | 18.5% |
| Cheese | 15.5% | 16.0% |
| Oatmeal | 15.0% | 16.0% |
| Brown rice | 15.0% | 16.0% |
| Sweet potato | 14.8% | 14.3% |
| Inulin | 0.10% | 0.10% |
| Natural tocopherols | 0.13% | 0.13% |
| Total | 100% | 100% |

### Example 2. Exemplary Bacon Topper Formulations

The following Tables 4 - 5 describe the bacon-first design and various optional features of the protein-rich bacon topper food product including, but not limited to, the ingredients and estimated nutrient level that may be used in the bacon topper production flow chart 200 as described in the FIGS. 4A and 4B.

**Table 4. Bacon topper formulation example**

| **Ingredients** | **Formula, by % of whole** |
|---|---|
| Pork bacon | 15.06% |
| Pork shoulder | 14.17% |
| Pork liver | 13.96% |
| Pork kidney | 13.44% |
| Pork heart | 12.66% |
| Cheddar cheese | 8.77% |
| Oatmeal | 6.41% |
| Vegetable and fruit premix | 13.17% |
| Natural tocopherols | 0.09% |
| Vionate® (25 ingredients) | 0.02% |
| Vitamins and mineral premix | 2.26% |
| Total | 100.00% |

**Table 5. Bacon Topper formulation example**

| **Ingredients** | **Formula, by % of whole** |
|---|---|
| Pork bacon | 25.32% |
| Pork shoulder | 20.15% |
| Pork liver | 14.70% |
| Pork kidney | 11.89% |
| Pork heart | 11.21% |
| Cheddar cheese | 3.23% |
| Oatmeal | 7.09% |
| Vegetable and fruit premix | 5.80% |
| Natural tocopherols | 0.10% |
| Vionate® (25 ingredients) | 0.02% |
| Vitamins and mineral premix | 2.50% |
| Total | 100.00% |

### Example 3. Exemplary Bacon Diet Food Product Formulations

The following Tables 6-7 describe the bacon-first design and various optional features of the protein-rich complete balanced bacon diet food product including, but not limited to, the ingredients and estimated nutrient level that may be used in the complete balanced bacon diet production flow chart 300 as described in FIGS. 5A and 5B.

**Table 6. Bacon diet formulation example**

| **Ingredients** | **Formula, by % of whole** |
|---|---|
| Pork bacon | 11.91% |
| Pork shoulder | 10.31% |
| Pork liver | 11.45% |
| Pork kidney | 9.13% |
| Pork heart | 8.60% |
| Cheddar cheese | 9.30% |
| Pea powder | 8.26% |
| Brown rice | 9.15% |
| Oatmeal | 8.16% |
| Vegetable and fruit premix | 10.71% |
| Natural tocopherols | 0.11% |
| Vionate® (25 ingredients) | 0.03% |
| Vitamin and mineral premix | 2.88% |
| Total | 100.00% |

**Table 7. Bacon diet formulation example**

| **Ingredients** | **Formula, by % of whole** |
|---|---|
| Pork bacon | 12.45% |
| Pork shoulder | 11.16% |
| Pork liver | 10.99% |
| Pork kidney | 12.34% |
| Pork heart | 11.63% |
| Cheddar cheese | 4.03% |
| Pea powder | 8.93% |
| Brown rice | 9.90% |
| Oatmeal | 8.83% |
| Vegetable and fruit premix | 6.49% |
| Natural tocopherols | 0.12% |
| Vionate® (25 ingredients) | 0.03% |
| Vitamin and mineral premix | 3.12% |
| Total | 100.00% |

### Example 4: Exemplary Premix Package Options

Table 8 describes the premix package options for the vegetable and fruit described in FIGS. 3-6. Table 9 describes the premix package options for the vitamins and minerals and prebiotic premix packages described in in FIGS. 3-6.

**Table 8. Exemplary vegetable and fruit premix**

| **Vegetable and fruit premix** | **Formula, by % of whole** |
|---|---|
| Sweet potato, flesh and skin, raw | 69.28% |
| Carrot | 13.10% |
| Broccoli | 7.15% |
| Apples | 1.97% |
| Blueberry | 2.46% |
| Cranberry | 3.02% |
| Parsley | 3.02% |
| Total | 100.00% |

**Table 9. Exemplary premix for vitamins and minerals**

| **Vitamins & Mineral & Prebiotic premix** | **Formula, by % of whole** |
|---|---|
| Choline chloride 60% (BASF) | 1.917% |
| Calcium phosphate, anhydrous | 23.009% |
| Oatmeal | 40.479% |
| Calcium carbonate | 19.174% |
| Potassium chloride | 11.505% |
| Inulin | 1.150% |
| Taurine | 0.959% |
| ROVIMIX® Biotin | 0.048% |
| ROVIMIX® D3-500 | 0.004% |
| ROVIMIX® E-50 Adsorbate | 0.383% |
| Calcium iodate (Ca(IO3)2 | 0.010% |
| Ferrous sulfate, heptahydrate (FeSO4.7H2O) | 0.575% |
| Manganese carbonate (MnCO3) | 0.019% |
| Zinc sulfate, monohydrate (ZnSO4.H2O) | 0.767% |
| Total | 100.00% |

### Example 5. Experimental procedures

A total of 64 individually-fed pigs (32 barrows, 32 gilts; 28.41 ± 0.83 kg) were selected from the pool of 180 pigs, blocked by body weight and sex, and then randomly assigned to individual pens. Pens were randomly assigned to 1 of the 8 dietary treatments in a 4 × 2 factorial arrangement. Fat treatments included corn starch (CS), tallow (TW), corn oil (CO) and coconut oil (CN). Vitamin E (VE) supplementation was at 11 ppm (NRC, 2012) and 200 ppm in the form of DL (all-rac)-α-tocopheryl acetate (ATA, ROVIMIX E 50 ADS, DSM Nutritional Products, Inc., GA US). As defined in NRC (2012), one IU VE equals to 1 mg of DL- α-tocopheryl acetate.

Pigs were housed in a facility with completely slatted concrete flooring, with solid concrete alley in the middle. The room contained 72 pens, of which 64 were used in the study. Each pen was equipped with a conventional feeder with lid to reduce feed waste. A stainless steel automatic pig nipple water drinker was provided in each individual pen. Feeder and drinker were checked daily to assure proper function. Feed troughs were cleaned weekly to avoid accumulation of fouled feed in the corner of the feeder. Feed and water were provided ad libitum. Pigs were switched to subsequent phase diets according to their body weight at the time of weighing each week.

The diets were corn-soybean meal based in mash form and fed for five weight phases including 25-50, 50-75, 75-100, 100-125 kg, and 125-150 kg, respectively. Pigs were slaughtered at ∼150 kg. Multiple batches of experimental diets were mixed for each phase.

To prevent differences in non-treatment components of the diets, large quantities of the basal diet with different fat sources were mixed, to which different vitamin E treatment were then incorporated for each experiment. A basal diet with each of the four fat sources was first made. Then, each basal diet was divided into 2 fractions. One fraction was mixed with a premix to provide 11 IU/kg VE, and the other fraction was mixed with a premix to provide 200 IU/kg VE.

### Example 6. Effect of dietary fatty acid profile on the oxidative stability of pork loin

Lipid oxidation of pork loin obtained from pigs fed on corn oil (CO) or beef tallow (TW) diets was assessed by using the distillation method to analyze of secondary degradation products, including 2-thiobarbituric acid reactive substances (TBARS). Briefly, a 5 g surface loin sample from each day at display was homogenized with 22.5 mL of 11% trichloroacetic acid solution (TCA) and filtered through Whatman no. 1 paper. Two ml of filtrate was mixed with two mL of aqueous solution of thiobarbituric acid (20 mM) and incubated at room temperature for 20 h. The absorbance values at 532 nm were then measured utilizing a UV-1800 spectrophotometer (Shimadzu Corporation, Kyoto, Japan). The value of concentration of thiobarbituric acid reactive substances (TBARS) was calculated from a standard line based on known concentration of a standard malondialdehyde (Cayman, Ann Arbor, MI). Pork loins were collected from pigs fed with 5% corn oil or 5% tallow at slaughter. Pork loins were displayed at 4° C in darkness for 7 days.

As shown in FIG. 7, results indicate the lipid oxidation development with time is affected by fat sources of dietary intake, as indicated by the interaction between time and fat sources (P < 0.01). Further comparison of the slopes for the development of TBARS along with time also confirmed this effect, where the TBARS content from pigs fed CO diets increased in a greater (P < 0.05) slope compared to those from pigs fed TW diets.

### Example 7. Effect of dietary fatty acid profile of on the fatty acid profile of retroperitoneal fat

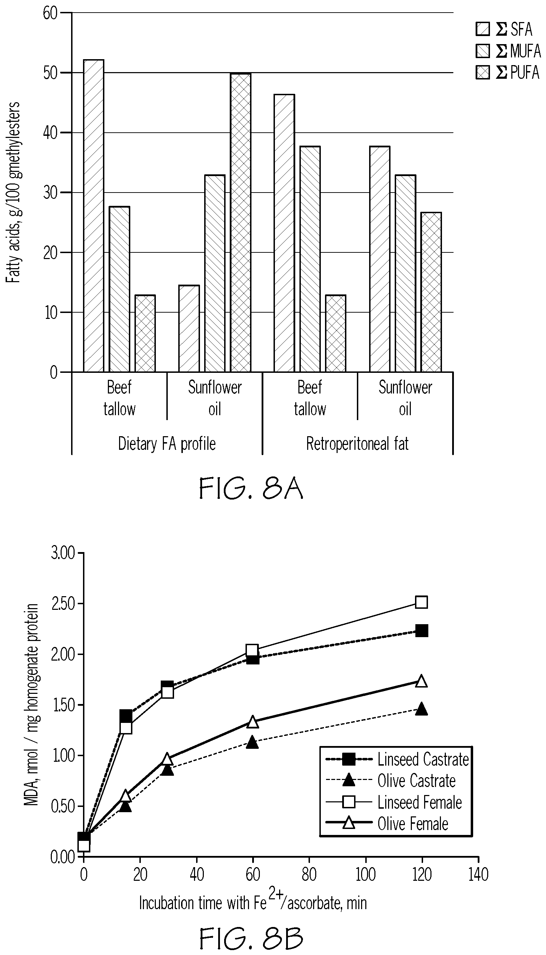

As dietary fat is incorporated into the lipid tissues in pigs, the fatty acid composition of pig adipose tissue reflects that of the animal's diet. As depicted in FIG. 8A, when pigs were fed with either 5% beef tallow diets or 5% sunflower oil diets, the fatty acid profiles of the pork retroperitoneal fat aligned with those of their dietary fat sources. Namely, pigs fed with diets comprising 5% sunflower oil had higher polyunsaturated fatty acid levels in retroperitoneal fat than pigs fed with diets comprising 5% beef tallow.

### Example 8. Effect of dietary fatty acid profile on the oxidative stability of pork

Similar to the unsaturated fat in various fats, the unsaturated fats deposited in the tissue also influence the shelf life of pork through the oxidative breakdown. As shown in FIG 8B, the muscle lipid from pigs fed diets comprising 5% olive oil has a higher oxidative stability than the muscle lipid from pigs fed diets comprising 5% linseed oil, which has relatively higher levels of unsaturated fatty acids compared to olive oil. Results show that pig diet, and particularly the fatty acid profile of the pig diet, may be selected in order to produce a pork product having a desired fatty acid profile and, accordingly, greater oxidative stability/resistance to rancidity.

### Example 9. Effect of dietary fatty acid profile on fatty acid profile of pork backfat

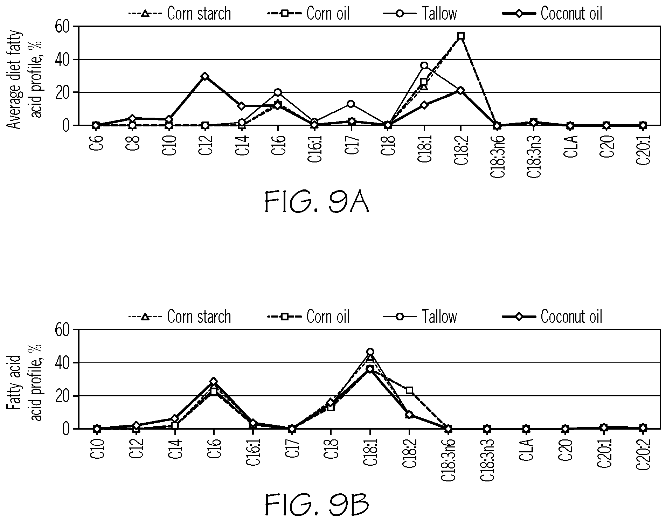

As the most common fatty acid in grains and oilseeds, linoleic acid (C18:2n-6) content, which is relatively low in animal fat, is significantly impacted by the composition of dietary fatty acids. FIG. 9A shows a full fatty acid profile of four different diets including corn starch, corn oil, beef tallow, and coconut oil. Fig. 9B shows the resultant fatty acids profile in pork backfat obtained from animals fed the diets of FIG. 9A. Results indicate that linoleic acid is the fatty acid most readily impacted by the composition of dietary fat intake. Accordingly, linoleic acid provides a key quality control point for the selection of bacon starting materials having the desired resistance to oxidation/rancidity suitable for use in the disclosed methods and products.

### Example 10. Fatty acid profile comparison of bacon brands and correlation with peroxide value

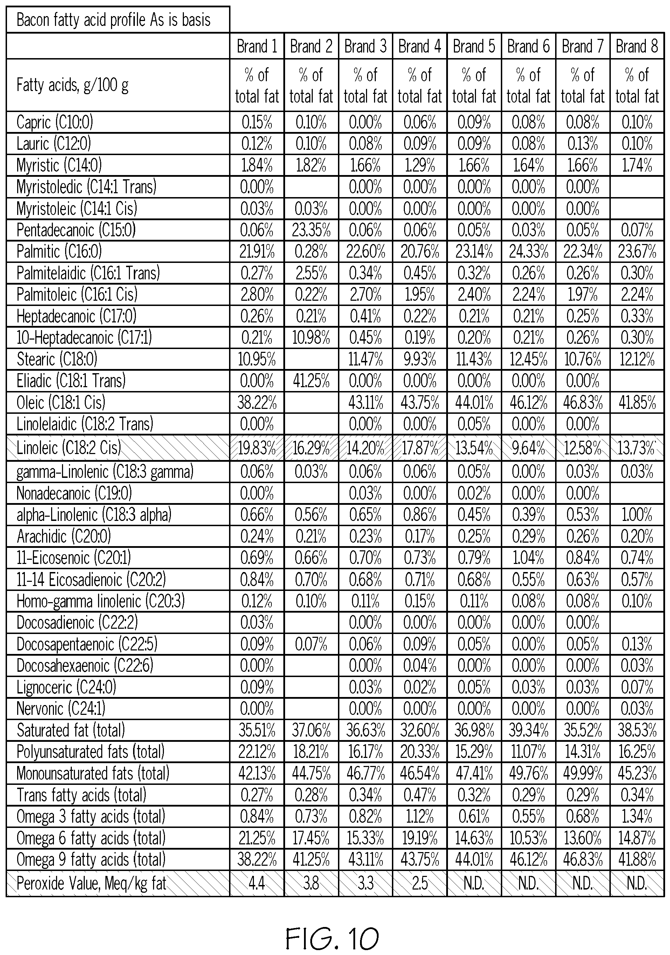

Eight bacon samples obtained from different vendors were analyzed to determine complete fatty acid profile. Results are shown in FIG. 10. The data indicate that a linoleic acid threshold of 14% or less of total fatty acid content correlates with improved pork belly quality, as evidenced by peroxide value as a measure of oxidation. Below 14%, peroxide values were not detectable (ND), indicating the bacon samples demonstrated desirable resistance to rancidity.

### Example 11. Accelerated shelf life studies demonstrating extended shelf life of 18 months

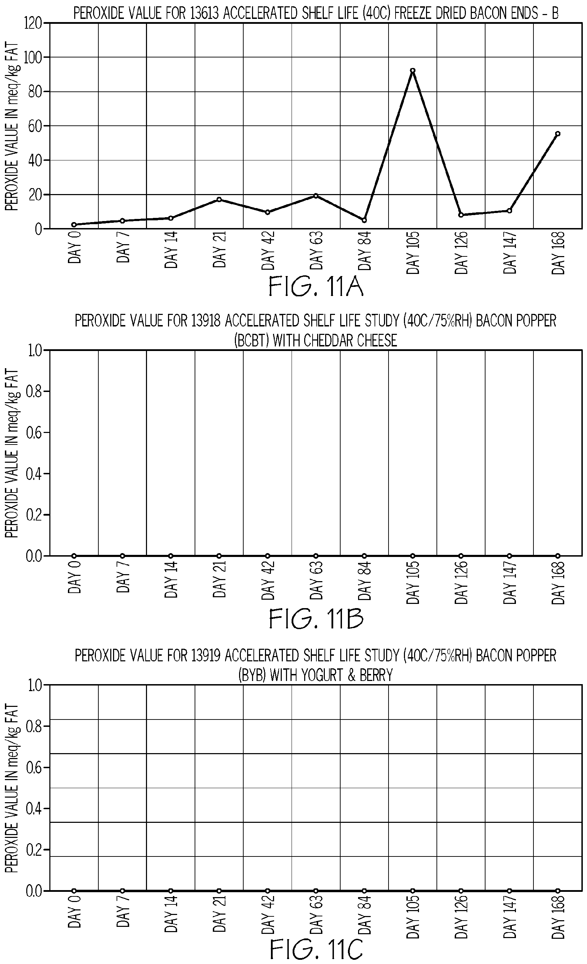

Shelf life of bacon-based treats according to the disclosure was compared to shelf life of freeze-dried bacon via accelerated shelf life studies. Briefly, freeze-dried bacon having a linoleic acid content higher than 14% (w/w) total fatty acid content and bacon treats produced according to the instant disclosure were placed in a 40 °C oven for 168 days (i.e., accelerated conditions that approximate an 18 month storage period at typical room temperature). Lipid oxidation was evaluated as a function of peroxide value in the samples at specified sampling time points. As shown in FIG. 11A, the freeze-dried bacon had a relatively short shelf life, displaying unacceptable levels of rancidity due to lipid oxidation by day 21. Conversely, as shown in FIGS. 11B (bacon treat comprising cheddar cheese) and 11C (bacon treat comprising yogurt and berry), the lipid oxidation of the bacon treats was well controlled and the bacon treat products demonstrated a stable shelf life of 18 months. Results indicate that a bacon-based product that employs the proper bacon starting material (i.e., selected to comprise a linoleic acid concentration of 14% (w/w) or lower of total fatty acid content) and formulation is resistant to rancidity and has an improved shelf life of 18 months.

Within the present disclosure, one or more of the following claims may utilize the term "wherein" as a transitional phrase. For the purposes of defining features discussed in the present disclosure, this term is introduced in the claims as an open-ended transitional phrase that is used to introduce a recitation of a series of characteristics of the structure and should be interpreted in like manner as the more commonly used open-ended preamble term "comprising."

Within the present disclosure, terms such as "preferably," "generally," and "typically" are not utilized in the present disclosure to limit the scope of the claims or to imply that certain features are critical, essential, or even important to the disclosed structures or functions. Rather, these terms are merely intended to highlight alternative or additional features that may or may not be utilized in a particular embodiment of the disclosed subject matter. Likewise, it is noted that the terms "substantially" and "approximately" and their variants are utilized to represent the inherent degree of uncertainty that may be attributed to any quantitative comparison, value, measurement or other representation. As such, use of these terms represents the degree by which a quantitative representation may vary from a stated reference without resulting in a change in the basic function of the subject matter at issue.

Within the present disclosure, the following claims are not written in means-plus-function format and are not intended to be interpreted based on 35 USC 107(f) unless and until such claim limitations expressly use the phrase "means for" followed by a statement of function void of further structure.

Having described the subject matter of the present disclosure in detail and by reference to specific embodiments, it is noted that the various details disclosed in the present disclosure should not be taken to imply that these details relate to elements that are essential components of the various described embodiments, even in cases where a particular element is illustrated in each of the drawings that accompany the present description. Further, it will be apparent that modifications and variations are possible without departing from the scope of the present disclosure, including, but not limited to, embodiments defined in the appended claims. More specifically, although some aspects of the present disclosure may be identified as preferred or particularly advantageous, it is contemplated that the present disclosure is not necessarily limited to these aspects.

It will be apparent to those skilled in the art that various modifications and variations can be made to the described embodiments without departing from the spirit and scope of the claimed subject matter. Thus it is intended that the specification cover the modifications and variations of the various described embodiments provided such modification and variations come within the scope of the appended claims and their equivalents.

## Claims

1. A method for manufacturing a shelf-stable bacon-based meat product, the method comprising:
(a) selecting a bacon starting material having a linoleic acid concentration of about 14% (w/w) or less of total fatty acid content;
(b) mixing the selected bacon starting material with at least one natural antioxidant and one or more additional ingredients to provide a bacon-based blend; and
(c) freeze-drying the bacon-based blend to provide a shelf-stable bacon-based meat product.

2. The method according to claim 1, further comprising cooking the selected bacon starting material prior to the mixing of step (b).

3. The method according to claim 1 or claim 2, further comprising shaping the bacon-based blend prior to the freeze-drying of step (c).

4. A method for manufacturing a shelf-stable bacon-based meat product, the method comprising:
(a) selecting a bacon starting material having a linoleic acid concentration of about 14% (w/w) or less of total fatty acid content;
(b) cooking the selected bacon starting material;
(c) mixing the product of step (b) with at least one natural antioxidant and one or more additional ingredients to provide a bacon-based blend;
(d) shaping the bacon-based blend; and
(e) freeze-drying the shaped bacon-based blend to provide a shelf-stable bacon-based meat product.

5. The method according to claim 2 or claim 4, wherein cooking the selected bacon starting material comprises baking or sous vide cooking.

6. The method according to claim 5, wherein cooking the selected bacon starting material comprises sous vide cooking.

7. The method according to:
(i) any of claims 1 to 3, or claim 5 or claim 6 when dependent on any of claims 1 to 3, further comprising grinding the selected bacon starting material prior to the mixing of step (b); or
(ii) claim 4, or claim 5 or claim 6 when dependent on claim 4, further comprising grinding the cooked selected bacon starting material prior to the mixing of step (c).

8. The method according to:
(i) any of claims 1 to 3, or claims 5 to 7 when dependent on any of claims 1 to 3, further comprising high pressure processing (HPP) the bacon-based blend prior to the freeze-drying of step (c); or
(ii) claim 4, or any of claims 5 to 7 when dependent on claim 4, further comprising high pressure processing (HPP) the bacon-based blend prior to the shaping of step (d).

9. The method according to:
(i) any of claims 1 to 3, or claims 5 to 8 when dependent on claims 1 to 3, further comprising freezing the bacon-based blend prior to the freeze-drying of step (c); or
(ii) claim 4, or any of claims 5 to 8 when dependent on claim 4, further comprising freezing the product of step (d) prior to the freeze-drying of step (e).

10. The method according to any preceding claim, wherein the bacon-based meat product is a bacon-first food product.

11. The method according to any preceding claim, wherein the bacon starting material comprises cured or uncured smoked pork belly.

12. The method according to any preceding claim, wherein the linoleic acid concentration of the bacon starting material is:
(i) about 13% (w/w) or less of the total fatty acid content; or
(ii) about 8% or less of the total fatty acid content.

13. The method according to any preceding claim, wherein the one or more additional ingredients are independently selected from the group consisting of pork, cheese, vegetables, fruit, grains, legumes, vitamins, minerals, additives, and combinations thereof.

14. The method according to any preceding claim, wherein the at least one natural antioxidant comprises mixed tocopherols.

15. A shelf-stable bacon-based meat product manufactured by the process of any preceding claim.
